# EUROPÄISCHE PATENTSCHRIFT

(11) **EP 3 882 461 B1**
(45) Veröffentlichungstag und Bekanntmachung des Hinweises auf die Patenterteilung: **28.02.2024**
(21) Anmeldenummer: 21153078.7
(22) Anmeldetag: 22.01.2021
(51) Int. Cl.: F04B 15/02, B60K 6/48, E04G 21/04, F04B 17/03, F04B 17/05, F04B 17/06, F04B 9/02

(54) **AUTOBETONPUMPE**
CONCRETE PUMP TRUCK
POMPE À BÉTON AUTOMOTRICE

(30) Priorität: 16.03.2020 DE 202020101432 U; 08.01.2021 DE 102021100204
(43) Veröffentlichungstag der Anmeldung: 22.09.2021
(73) Patentinhaber: Liebherr-Mischtechnik GmbH, 88427 Bad Schussenried (DE)
(72) Erfinder: Seifried, Raphael, 89075 Ulm (DE); Fetzer, Johannes, 89278 Nersingen (DE); Westermann, Karl, 72574 Bad Urach (DE)
(74) Vertreter: Laufhütte, Dieter

(56) Entgegenhaltungen:
- EP-A1- 2 022 748
- EP-A1- 3 023 212
- CN-A- 104 827 903
- CN-B- 102 416 867
- CN-Y- 201 326 277
- DE-A1-102016 212 209

## Beschreibung

Die Erfindung betrifft eine Autobetonpumpe mit wenigstens einem Fahrantriebsmotor und einer hydraulischen Pumpvorrichtung.

Autobetonpumpen bestehen in der Regel aus einem handelsüblichen Lastwagenfahrgestell samt aufgesetzter Aufbaueinheit - typischerweise bestehend aus einer Betonpumpe, einer Abstützvorrichtung und einem Betonverteilermast. Die Energieversorgung aller Antriebe dieser Aufbaueinheit erfolgt üblicherweise hydraulisch per hydraulischer Pumpvorrichtung. Diese Pumpvorrichtung umfasst in der Regel ein oder mehrere Hydraulikpumpen, die mindestens einen hydraulisch angetriebenen Pumpzylinder versorgen, um Frischbeton über einem Verteilermast an die gewünschte Stelle zu fördern. Weitere Hydraulikpumpen oder sonstige hydraulische Verbraucher, bspw. zur Mastverstellung, können ebenso Bestandteil der Pumpvorrichtung sein.

Gattungsgemäße Autobetonpumpen arbeiten üblicherweise mit diesel-hydraulischen Antrieben, d.h. der Dieselmotor des als Trägerfahrzeug dienenden handelsüblichen Latswagenfahrgestells für den Fahrbetrieb treibt auf der Baustelle während des stationären Pumpbetriebs die hydraulische Pumpvorrichtung an. Die dabei entstehenden Lärm- und Abgasemissionen sind gerade bei innerstädtischen Baustellen unerwünscht. Gattungsgemäße Autobetonpumpen sind zum Beispiel aus den Dokumenten CN 102 416 867 B, CN 201 326 277 Y, DE 10 2016 212 209 A oder CN 104 309 467 A bekannt.

Die Aufgabe der vorliegenden Erfindung besteht daher darin, eine Autobetonpumpe ohne technische Änderung des als Trägerfahrzeug dienenden, handelsüblichen Lastwagenfahrgestells so weiterzuentwickeln, dass insbesondere die unerwünschten Dieselabgase beim stationären Pumpebtrieb entfallen.

Diese Aufgabe wird durch eine Autobetonpumpe gemäß den Merkmalen des Anspruchs 1 gelöst. Vorteilhafte Ausführungen der Autobetonpumpe sind Gegenstand der abhängigen Ansprüche.

Erfindungsgemäß wird vorgeschlagen, die Autobetonpumpe zusätzlich mit einem Elektromotor auszustatten. Es soll jedoch kein rein elektrisch-hydraulischer Antrieb der hydraulischen Pumpvorrichtung umgesetzt werden, sondern erfindungsgemäß wird eine Wahlmöglichkeit geschaffen, um die hydraulische Pumpvorrichtung entweder mittels des Elektromotors oder alternativ mittels des verbauten Fahrantriebsmotors anzutreiben. Bei dem Fahrantriebsmotor kann es sich insbesondere um einen Verbrennungsmotor bzw. einen Dieselmotor handeln. Der Einfachheit halber wird nachfolgend überwiegend von einem Verbrennungsmotor als Fahrantriebsmotor ausgegangen, die folgenden Ausführungen gelten jedoch gleichermaßen hinsichtlich einer alternativen Ausführung des Fahrantriebsmotors. Bspw. könnte dieser durch einen weiteren elektrischen Fahrantriebsmotor gebildet sein.

Der Aufbau der Autobetonpumpe umfasst ein handelsübliches Lastwagenfahrgestell, auf diesem eine Aufbaueinheit bestehend aus einer hydraulischen Pumpvorrichtung und vorzugsweise einem Betonverteilermast aufgesetzt ist. Die Energieversorgung eines Teils oder aller Antriebe dieser Aufbaueinheit erfolgt hydraulisch mittels ein oder mehrerer Hydraulikpumpen.

Der Fahrantriebsmotor der Autobetonpumpe entspricht dem Fahrantrieb des handelsüblichen Lastwagenfahrgestells und erfolgt über eine drehmomentenübertragende mechanische Verbindung zwischen dem Fahrantriebsmotor und der oder den Antriebsachsen des handelsüblichen Lastwagenfahrgestells, vorzugsweise eine Kardanwelle. Unter der hydraulischen Pumpvorrichtung ist zumindest ein Teil der Hydraulik für den Pumpbetrieb zu verstehen. Darunter fallen bspw. wenigstens eine Hydraulikpumpe zur Bereitstellung der hydraulischen Energieversorgung sowie wenigstens ein hydraulisch angetriebenes Pumpaggregat zur Förderung des flüssigen Betons, bspw. in Form eines Pumpzylinders. Weitere Hydraulikpumpen können vorgesehen sein, um etwaige Nebenverbraucher zu speisen, bspw. auch eine hydraulische Aktorbetätigung zur Verstellung des Verteilermastes der Betonpumpe.

Primär soll die Autobetonpumpe, insbesondere die hydraulische Pumpvorrichtung im stationären Pumpbetrieb durch den Elektromotor betrieben werden. Dadurch lässt sich die Emission der unerwünschten Dieselabgase vermeiden. Für den Notfall, d.h. fehlt es an der notwendigen elektrischen Energie für den Betrieb des Elektromotors, bspw. mangels einer notwendigen Netzinfrastruktur auf der Baustelle, soll alternativ auf einen verbauten Verbrennungsmotor der Autobetonpumpe, insbesondere des Trägerfahrzeuges ausgewichen werden können. Die hydraulische Pumpvorrichtung, insbesondere wenigstens eine Hydraulikpumpe, soll folglich wahlweise durch einen internen Elektromotor oder alternativ einen internen Fahrantriebsmotor/Verbrennungsmotor der Autobetonpumpe antreibbar sein. Bei Verwendung eines Antriebmotors kann die alternative Antriebsvariante vorzugsweise ausser Betrieb, d.h. abgeschaltet bleiben.

Der genutzte Fahrantriebsmotor/Verbrennungsmotor dient primär für den Fahrantrieb der Autobetonpumpe, insbesondere ist dieser Bestandteil des Trägerfahrzeugs und mit dem Fahrantriebsstrang für die reguläre Strassenfahrt des Fahrzeuges verbunden. Der Verbrennungsmotor ist beispielsweise ein Dieselaggregat.

Die wahlweise Versorgung der hydraulischen Pumpvorrichtung mittels des Fahrantriebsmotors/Verbrennungsmotors oder des zusätzlichen installierten Elektromotors wird durch die Zwischenschaltung eines Verzweigungsgetriebes zwischen Hydraulik und Antriebsaggregaten erreicht. Ein solches Verzweigungsgetriebe hat zwei Antriebseingänge und einen Abtrieb. Verbrennungsmotor und Elektromotor sind mit jeweils einem Eingang gekoppelt, während die hydraulische Pumpvorrichtung, insbesondere wenigstens eine Hydraulikpumpe mit dem Abtrieb des Verzweigungsgetriebes gekoppelt ist.

Der Verbrennungsmotor dient wie bereits vorstehend erläutert als Fahrantrieb und ist über ein Verteilergetriebe mit dem Fahrantriebsstrang der Autobetonpumpe verbunden. Über einen Nebenabtrieb des Verteilergetriebes wird die mechanische Verbindung zum Verzweigungsgetriebe für den hilfsweisen Antrieb der hydraulischen Pumpvorrichtung hergestellt. Der Nebenabtrieb des Verteilergetriebes ist ein motorabhängiger Nebenabtrieb, der direkt mit der Kurbelwelle des Verbrennungsmotors verbunden ist, wobei ein erster Eingang des Verzweigungsgetriebes über eine Wellenverbindung mit dem Nebenabtrieb des Verteilergetriebes verbunden ist. Wichtig ist, dass bei der erfindungsgemäßen Lösung das Verzweigungsgetriebe zur Anbindung der wenigstens einen Hydraulikpumpe nicht in den Fahrantriebsstrang eingebunden ist, sondern stattdessen mit dem Nebenabtrieb des Motors bzw. des motorseitigen Verteilergetriebes. Da für den Aufbau der Betonpumpe regelmäßig ein fertiges, handelsübliches LKW-Fahrzeugchassis mit bereits existierendem Fahrantriebsstrang eingesetzt wird, das mit dem benötigten Aufbau der Betonpumpe bestückt wird, kann durch die Anbindung des Verzweigungsgetriebes am Nebenabtrieb des Fahrantriebsmotors des Fahrzeugchassis der Fahrantriebsstrang des Trägerfahrzeuges unverändert bleiben.

Gemäß bevorzugter Ausführung sitzen der Elektromotor und die wenigstens eine Hydraulikpumpe auf getrennten Wellen, wodurch die Kraftübertragung zwischen dem Elektromotor und der wenigstens einen Hydraulikpumpe unterbrechbar ist. Auch der Verbrennungsmotor sitzt bevorzugt auf einer separaten Welle. Das Verzweigungsgetriebe kann für diesen Fall als Verteilerschaltgetriebe ausgeführt sein und umfasst bspw. zwei Schaltzustände, um wahlweise das Drehmoment vom ersten oder zweiten Eingang auf den Abtrieb zu übertragen. Vorstellbar ist natürlich auch eine Verschaltung, bei dieser die Drehmomente beider Eingänge auf den Abtrieb übertragen werden, d.h. Elektromotor und Verbrennungsmotor stellen gemeinsam das notwendige Antriebsdrehmoment für die hydraulische Pumpvorrichtung bereit. Die bevorzugte Variante sieht jedoch vor, dass eine Kraftübertragung ausschliesslich von einem Eingang auf den Abtrieb erfolgt, während der zweite Eingang mechanisch entkoppelt ist.

Die Anordnung von Hydraulikpumpe und Elektromotor auf separaten Wellen hat zudem den Vorteil, dass der Elektromotor flexibel platzierbar ist, insbesondere im Verhältnis zur wenigstens einen Hydraulikpumpe. Dadurch lässt sich der Elektromotor bspw. auf derselben Seite des Verzweigungsgetriebes wie die wenigstens eine Hydraulikpumpe anordnen. Es spricht jedoch nichts dagegen, Elektromotor und wenigstens eine Hydraulikpumpe auf gegenüberliegenden Seiten des Verzweigungsgetriebes anzuordnen.

Der eingesetzte Elektromotor kann eine elektrische Leistung von mindestens 80kW, bevorzugt mindestens 100kW und idealerweise von etwa 130kW aufweisen. Aufgrund der vorgenannten flexiblen Montagemöglichkeit des Elektromotors bestehen weniger Restriktionen bezüglich der Motorgröße, weshalb sich vorliegend auch ein vergleichsweise großer Elektromotor mit ausreichend elektrischer Leistung verbauen lässt. Der Elektromotor kann ein Synchronmotor, insbesondere flüssigkeitsgekühlter Synchronmotor sein. Denkbar ist auch eine Ausführung als Ringmotor, der direkt auf der anzutreibenden Welle, bspw. dem Getriebeeingang des Verzweigungsgetriebes verbaut ist.

Die Autobetonpumpe kann mit einem externen Netzanschluss ausgestattet sein, um die Versorgung des Elektromotors aus einem externen Stromnetz zu ermöglichen. Dadurch lässt sich die Autobetonpumpe an ein stationäres Baustellennetz anschließen, um ausreichend elektrische Leistung für den Pumpbetrieb abgreifen zu können. Steht ein elektrisches Baustellennetz nicht zu Verfügung, kann der Pumpbetrieb auf den Verbrennungsmotor umgeschaltet werden.

Der Netzanschluss der Autobetonpumpe kann durch mehrere Anschlussstellen realisiert sein, wodurch über mehrere Stromzuführleitungen die notwendige Energie zuführbar ist. Bspw. kann durch Verwendung aller steckbaren Leitungen die Maximalleistung für den Pumpbetrieb abgegriffen werden. Die Verwendung weniger Anschlussstellen gestattet auch einen Anschluss an schwächere Baustellenstromnetze mit weniger Anschlusskabel, für den Pumpbetrieb steht dann jedoch nur eine reduzierte Leistung zur Verfügung. Die Anschlussstellen der Autobetonpumpe können vorzugsweise für unterschiedliche oder alternativ identische Dauerlasten konzipiert sein. Die Anschlussstellen können als CEE-Dosen, insbesondere 5 polige CEE-Dosen ausgeführt sein. Vorstellbar ist bspw. eine erste CEE-Dose mit einer maxiamlen Dauerlast von 63A bei 400V, während eine zweite CEE-Dose für eine höhere maximale Dauerlast ausgelegt ist, bspw. für eine Dauerlast von 125A bei 400V. Genauso können die Anschlussstellen auch an normierte Vorgaben anderer Länder angepasst sein, bspw. in Form von in den USA eingesetzten "IEC connectors", die die entsprechenden Richtlinien IEC 60309-1 und 60309-2 erfüllen. Auch hier sind unterschiedliche Anschlusstellen denkbar, die für unterschiedliche Dauerlasten ausgelegt sind, bspw. für 30A, 60A und 100A bei einer Spannung zwischen 500 und 600VAC.

Weitere Vorteile und Eigenschaften der Erfindung sollen nachfolgend anhand eines in den Zeichnungen dargestellten Ausführungsbeispiels erläutert werden. Es zeigen:
- Figur 1:: eine schematische Seitenansicht der erfindungsgemäßen Autobetonpumpe und
- Figur2:: eine Detailansicht des Antriebsstrangs für die Versorgung der hydraulischen Pumpenvorrichtung.

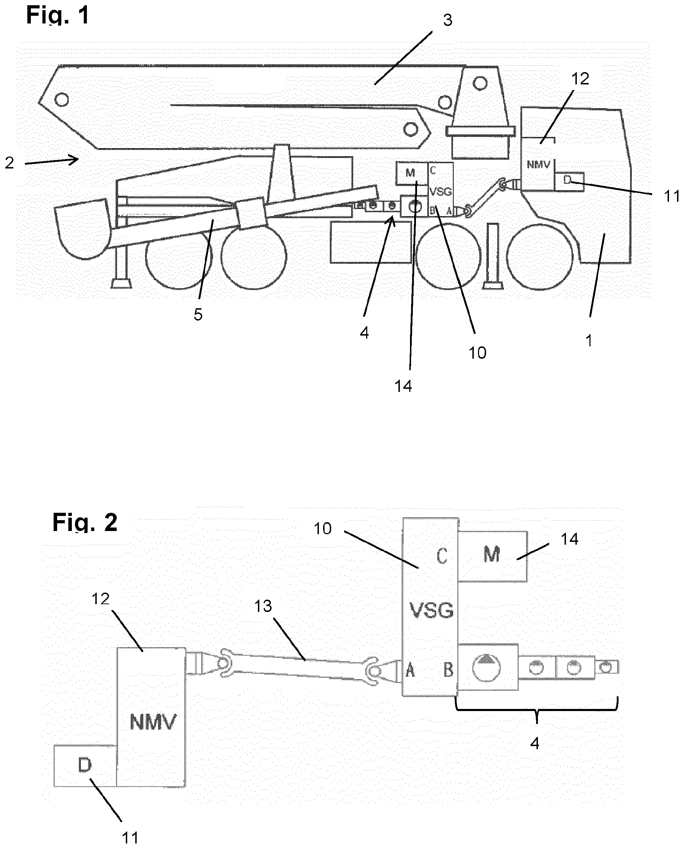

Figur 1 zeigt schematisch eine Seitenansicht der erfindungsgemäßen Autobetonpumpe bestehend aus einem handelsüblichen Lastwagenfahrgestell 1 mit Farhantriebsmotor 11 für den Fahrbetrieb und einem darauf montierten Oberbau 2 mit der hydraulischen Pumpvorrichtung. Der Oberbau umfasst im Wesentlichen einen Verteilermast 3 sowie die hydraulische Pumpvorrichtung mit mehreren Hydraulikpumpen 4. Die Hydraulikpumpen 4 sorgen unter anderem für den notwendigen Hydraulikdruck zum Betrieb des Pumpzylinders 5 sowie etwaiger Nebenverbraucher oder Aktoren zur Verstellung des Verteilermastes 3.

Wie dies insbesondere der Detaildarstellung in Figur 2 zu entnehmen ist, sind die Hydraulikpumpen 4 gemeinsam mit dem Abtrieb B eines Verteilerschaltgetriebes 10 gekoppelt. Dieses Verteilerschaltgetriebe 10 umfasst neben dem Abtrieb B zwei Eingänge A, C. Je nach Schaltzustand des Verteilerschaltgetriebes 10 kann wahlweise die am Eingang A anliegende mechanische Leistung oder die am Eingang C anliegende mechanische Leistung auf den Abtrieb B durchgeschaltet werden, gegebenenfalls in Verbindung mit der notwendigen Übersetzung.

Der erste Eingang A ist über eine Wellenverbindung 13 mit einem Nebenabtrieb eines Verteilergetriebes 12 des Fahrantriebsstrangs des Lastwagenfahrgestells 1 verbunden. Am Eingang des Verteilergetriebes 12 ist ein Dieselaggregat 11 angeflanscht, der Hauptabtrieb des Verteilergetriebes 12 ist mit dem weiteren Fahrantriebsstrang für die Strassenfahrt des Lastwagenfahrgestells 1 bzw. der Autobetonpumpe gekoppelt. Demzufolge dient das Dieselaggregat 11 des Lastwagenfahrgestells 1 primär der Realisierung des Fahrbetriebs der Autopumpe, über den Nebenabtrieb des Verteilergetriebes 12 lässt sich jedoch zumindest ein Teil der mechanischen Leistung des Dieselaggregats 11 auch für den Antrieb der hydraulischen Pumpvorrichtung mit den Pumpen 4 verwenden.

Über den Eingang C ist ein Elektromotor 14 mit dem Verteilerschaltgetriebe 10 gekoppelt. Die Idee der erfindungsgemäßen Autobetonpumpe besteht darin, den stationären Pumpbetrieb primär elektrisch über den Elektromotor 14 und damit Emissionsfrei zu verwirklichen. Der Fahrantrieb der Autobetonpumpe wird wie bisher dieselbetrieben realisiert.

Die notwendige elektrische Energie für den Elektromotor 14 wird über einen Netzanschluss aus dem Baustellenstromnetz abgegriffen. Als Tribut an die häufig wechselnden Baustellen, auf diesen eine Autobetonpumpen zum Einsatz kommen kann, erfolgt der Anschluss ans Baustellenstromnetz über eine oder mehrere steckbare Verbindungen bzw. Stromzuführleitungen. Die Verwendung mehrerer, steckbarer Leitungen zur Realisierung der Maximalleistung ermöglicht eine Anpassung an schwächere Baustellenstromnetze durch Verwendung weniger Anschlusskabel, dann allerdings mit Leistungseinbußen.

Da die Baustellenstromnetze derzeit nicht flächendeckend für hohe elektrische Leistungsaufnahmen ausgelegt sind, steht eine geschickte Weiterentwicklung der Autobetonpumpe darin, den Fahrantrieb grundsätzlich per Dieselmotor 11 durchzuführen, den Antrieb des Hydraulikpumpenstrangs 4 aber wahlweise über den Dieselmotor 11 oder über den zusätzlich installierten Elektromotor 14 zu ermöglichen.

Mittels der Erfindung wird ein Hybridantrieb der Aufbaueinheit 2 der Autobetonpumpe realisiert, der einen voll-elektrischen oder dieselelektrischen Antrieb der Pumpenhydraulik ermöglicht. Der erfindungsgemäße Aufbau gestattet weiterhin die Verwendung eines handelsüblichen Lastwagenfahrgestells 1, auf diesem die Aufbaueinheit 2 bestehend aus dem Verteilermast 3, der Pumpvorrichtung mit den Pumpen 4 sowie dem Pumpzylinder 5 aufgesetzt wird. Die Erweiterung der Aufbaueinheit um das Verteilerschaltgetriebe 10 und den Elektromotor erlaubt einen elektrischen Antrieb der Aufbaueinheit im stationären, ortsunveränderlichen Betrieb per Kopplung an das öffentliche Stromnetz.

Durch die Anbindung des Verteilerschaltgetriebes 10 an den Nebenabtrieb des Lastwagenfahrantriebsstrangs ist ein Eingriff in den Fahrantrieb des handelsüblichen Lastwagenfahrgestells 1 nicht notwendig.

Der Fahrantrieb der Autobetonpumpe entspricht dem Fahrantrieb des handelsüblichen Lastwagenfahrgestells 1 und erfolgt über eine drehmomentenübertragende mechanische Verbindung zwischen dem Fahrantriebsmotor 11 und der oder den Antriebsachsen des handelsüblichen Lastwagenfahrgestells 1, vorzugsweise mittels einer Kardanwelle.

## Patentansprüche

1. Autobetonpumpe mit wenigstens einem Fahrantriebsmotor (11) und einer hydraulischen Pumpvorrichtung zum Fördern von flüssigem Beton, wobei wenigstens ein Elektromotor (14) vorgesehen ist und die hydraulische Pumpvorrichtung wahlweise durch den wenigstens einen Fahrantriebsmotor (11) oder den wenigstens einen Elektromotor (14) antreibbar ist, wobei der Fahrantriebsmotor (11) über einen Nebenabtrieb eines Verteilergetriebes (12) des Fahrantriebsstrangs der Autobetonpumpe mit einem Verzweigungsgetriebe (10) verbunden ist, wobei ein erster Getriebeeingang des Verzweigungsgetriebes (10) mit dem Nebenabtrieb des Fahrantriebsmotors (11) und ein zweiter Getriebeeingang mit dem Elektromotor (14) gekoppelt und der Getriebeabtrieb des Verzweigungsgetriebes (10) mit wenigstens einer Hydraulikpumpe (4) der hydraulischen Pumpvorrichtung verbunden ist,
**dadurch gekennzeichnet, dass**
der Nebenabtrieb des Verteilergetriebes (12) ein motorabhängiger Nebenabtrieb ist, der direkt mit der Kurbelwelle des Fahrantriebsmotors (11) verbunden ist, wobei ein erster Eingang A des Verzweigungsgetriebes (10) über eine Wellenverbindung (13) mit dem Nebenabtrieb des Verteilergetriebes (12) verbunden ist.

2. Autobetonpumpe nach Anspruch 1, **dadurch gekennzeichnet, dass** der Fahrantriebsmotor (11) ein Verbrennungsmotor ist.

3. Autobetonpumpe nach einem der vorstehenden Ansprüche, **dadurch gekennzeichnet, dass** der Elektromotor (14) und die wenigstens eine Hydraulikpumpe (4) und/oder der Fahrantriebsmotor (11) jeweils auf getrennten Wellen sitzen, wodurch die Kraftübertragung zwischen dem Elektromotor (14) und der wenigstens einer Hydraulikpumpe (4) unterbrechbar ist.

4. Autobetonpumpe nach einem der vorstehenden Ansprüche, **dadurch gekennzeichnet, dass** der Elektromotor (14) und die wenigstens eine Hydraulikpumpe (4) auf derselben Seite des Verzweigungsgetriebes (10) sitzen.

5. Autobetonpumpe nach einem der Ansprüche 1 bis 3, **dadurch gekennzeichnet, dass** der Elektromotor (14) und die wenigstens eine Hydraulikpumpe (4) auf gegenüberliegenden Seiten des Verzweigungsgetriebes (10) sitzen.

6. Autobetonpumpe nach einem der vorstehenden Ansprüche, **dadurch gekennzeichnet, dass** der Elektromotor (14) eine elektrische Leistung von mindestens 100kW, insbesondere von 130kW aufweist.

7. Autobetonpumpe nach einem der vorstehenden Ansprüche, **dadurch gekennzeichnet, dass** die wenigstens eine Hydraulikpumpe (4) entweder ausschliesslich mit dem Elektromotor (14) oder ausschliesslich mit dem Fahrantriebsmotor (11) mechanisch gekoppelt ist.

8. Autobetonpumpe nach einem der vorhergehenden Ansprüche, **dadurch gekennzeichnet, dass** der Elektromotor (14) über einen Netzanschluss der Autobetonpumpe, insbesondere nur über den Netzanschluss, mit elektrischer Energie speisbar ist.

9. Autobetonpumpe nach Anspruch 8, **dadurch gekennzeichnet, dass** der Netzanschluss ein oder mehrere Anschlussstellen für ein oder mehrere parallele Stromzuführleitungen umfasst, wobei die Anschlussstellen für identische oder unterschiedliche Dauerlastwerte konzipiert sind.

## Claims

1. Truck-mounted concrete pump having at least one travelling-drive motor (11) and a hydraulic pumping device for delivering liquid concrete, wherein at least one electric motor (14) is provided and the hydraulic pumping device can be driven selectively by the at least one travelling-drive motor (11) or the at least one electric motor (14), wherein the travelling-drive motor (11) is connected by way of a power take-off of a transfer gearbox (12) of the travelling-drive train of the truck-mounted concrete pump to a branching gearbox (10), wherein a first gearbox input of the branching gearbox (10) is coupled with the power take-off of the travelling-drive motor (11) and a second gearbox input is coupled with the electric motor (14), and the gearbox output of the branching gearbox (10) is connected to at least one hydraulic pump (4) of the hydraulic pumping device, **characterized in that**
the power take-off of the transfer gearbox (12) is an engine-dependent power take-off which is connected directly to the crankshaft of the travelling-drive motor (11), wherein a first input A of the branching gearbox (10) is connected by way of a shaft connection (13) to the power take-off of the transfer gearbox (12).

2. Truck-mounted concrete pump according to claim 1, **characterized in that** the travelling-drive motor (11) is an internal combustion engine.

3. Truck-mounted concrete pump according to one of the preceding claims, **characterized in that** the electric motor (14) and the at least one hydraulic pump (4) and/or the travelling-drive motor (11) are each located on separate shafts, as a result of which the power transmission between the electric motor (14) and the at least one hydraulic pump (4) can be interrupted.

4. Truck-mounted concrete pump according to one of the preceding claims, **characterized in that** the electric motor (14) and the at least one hydraulic pump (4) are located on the same side of the branching gearbox (10).

5. Truck-mounted concrete pump according to one of claims 1 to 3, **characterized in that** the electric motor (14) and the at least one hydraulic pump (4) are located on opposite sides of the branching gearbox (10).

6. Truck-mounted concrete pump according to one of the preceding claims, **characterized in that** the electric motor (14) has an electrical output of at least 100 kW, in particular of 130 kW.

7. Truck-mounted concrete pump according to one of the preceding claims, **characterized in that** the at least one hydraulic pump (4) is mechanically coupled either exclusively with the electric motor (14) or exclusively with the travelling-drive motor (11).

8. Truck-mounted concrete pump according to one of the preceding claims, **characterized in that** the electric motor (14) can be fed with electricity by way of a mains connection of the truck-mounted concrete pump, in particular only by way of the mains connection.

9. Truck-mounted concrete pump according to claim 8, **characterized in that** the mains connection comprises one or more connection points for one or more parallel power supply lines, wherein the connection points are designed for identical or different continuous load values.

## Revendications

1. Pompe à béton automotrice comportant au moins un moteur de mécanisme de translation (11) et un dispositif de pompe hydraulique destiné au transport de béton liquide, au moins un moteur électrique (14) étant prévu et le dispositif de pompe hydraulique pouvant être entraîné au choix par l'au moins un moteur de mécanisme de translation (11) ou l'au moins un moteur électrique (14), le moteur de mécanisme de translation (11) étant relié à un mécanisme de transmission d'embranchement (10) par le biais d'une prise de force d'une boîte de transfert (12) de la transmission du mécanisme de translation de la pompe à béton automotrice, une première entrée du mécanisme de transmission d'embranchement (10) étant couplée à la prise de force du moteur de mécanisme de translation (11) et une seconde entrée de mécanisme de transmission au moteur électrique (14) et la sortie du mécanisme de transmission d'embranchement (10) étant reliée à au moins une pompe hydraulique (4) du dispositif de pompe hydraulique,
**caractérisée en ce que**
la prise de force de la boîte de transfert (12) est une prise de force dépendante du moteur, qui est directement reliée au vilebrequin du moteur de mécanisme de translation (11), une première entrée A du mécanisme de transmission d'embranchement (10) étant reliée à la prise de force de la boîte de transfert (12) par le biais d'une pièce de raccordement d'arbre (13).

2. Pompe à béton automotrice selon la revendication 1, **caractérisée en ce que** le moteur de mécanisme de translation (11) est un moteur à combustion interne.

3. Pompe à béton automotrice selon l'une des revendications précédentes, **caractérisée en ce que** le moteur électrique (14) et l'au moins une pompe hydraulique (4) et/ou le moteur de mécanisme de translation (11) se trouvent respectivement sur des arbres séparés, moyennant quoi la transmission de force entre le moteur électrique (14) et l'au moins une pompe hydraulique (4) peut être interrompue.

4. Pompe à béton automotrice selon l'une des revendications précédentes, **caractérisée en ce que** le moteur électrique (14) et l'au moins une pompe hydraulique (4) se trouvent du même côté du mécanisme de transmission d'embranchement (10).

5. Pompe à béton automotrice selon l'une des revendications 1 à 3, **caractérisée en ce que** le moteur électrique (14) et l'au moins une pompe hydraulique (4) se trouvent sur des côtés opposés du mécanisme de transmission d'embranchement (10).

6. Pompe à béton automotrice selon l'une des revendications précédentes, **caractérisée en ce que** le moteur électrique (14) présente une puissance électrique d'au moins 100 kW, en particulier de 130 kW.

7. Pompe à béton automotrice selon l'une des revendications précédentes, **caractérisée en ce que** l'au moins une pompe hydraulique (4) est couplée mécaniquement soit exclusivement au moteur électrique (14), soit exclusivement au moteur de mécanisme de translation (11).

8. Pompe à béton automotrice selon l'une des revendications précédentes, **caractérisée en ce que** le moteur électrique (14) peut être alimenté en énergie électrique par le biais d'un raccordement au réseau de la pompe à béton automotrice, en particulier uniquement par le biais du raccordement au réseau.

9. Pompe à béton automotrice selon la revendication 8, **caractérisée en ce que** le raccordement au réseau comprend un ou plusieurs points de raccordement pour un ou plusieurs câbles d'alimentation de courant parallèles, les points de raccordement étant conçus pour des valeurs de charge permanente identiques ou différentes.
